# EUROPEAN PATENT SPECIFICATION

(11) **EP 1 811 720 B1**
(45) Date of publication and mention of the grant of the patent: **25.05.2011**
(21) Application number: 07007690.6
(22) Date of filing: 18.04.2002
(51) Int. Cl.: H04L 12/28, H04L 29/06, G10L 15/00, H04M 3/493

(54) **Apparatus and method for connecting apparatuses using radio link, method for creating usable scene table for apparatus connection, and recording medium**
Vorrichtung und Verfahren zur Verbindung von Vorrichtungen mittels Funkverbindung zur Schaffung eines brauchbaren Vorgangsschemas zur Vorrichtungsverbindung und Aufzeichnungsmedium
Appareil et procédé de connexion d'appareils utilisant une liaison radio, procédé de création d'un tableau de scène utilisable pour la connexion d'un appareil, et support d'enregistrement

(30) Priority: 19.04.2001 JP 2001121517
(43) Date of publication of application: 25.07.2007
(62) Divisional of application: 02720490.8
(73) Proprietor: Muroya, Hideki, Shibuya-ku, Tokyo 151-0064 (JP)
(72) Inventor: Muroya, Hideki, Shibuya-ku Tokyo 151-0064 (JP); Nishi, Yasuharu, Misato-shi, Saitama-Ken 341-0012 (JP)
(74) Representative: Brown, Kenneth Richard

(56) References cited:
- EP-A- 1 102 454
- WO-A-01/01655
- WO-A-01/26349
- WO-A-99/22493
- US-A- 5 838 926
- US-B1- 6 912 580

## Description

### TECHNICAL FIELD

This invention relates to a mutual device connection apparatus and method using a wireless link, a mutual device connection usable scene table creation method, and a medium for recording a program.

### BACKGROUND ART

Standards for connecting a plurality of electronic devices wirelessly instead of using conventional cables have been established and come into widespread use. Bluetooth (Trademark) is known as this type of wireless link. This wireless link is a short range wireless link between a moving body and a fixed electronic device, or a short range wireless link intended to replace a cable between the moving body and the fixed electronic device. The main characteristics are rigidity, simplicity, low electrical power consumption, and low costs.

The range of access of the wireless link is on the order to 10 meters, and targeted devices are devices in separate rooms and those held by people themselves, or electronic devices that are within reach.

When a PDA (personal digital assistant) is equipped with a wireless link function, upon entering a conference room holding the PDA, for example, the presence of a fixed printer (or modem) and so forth installed in the conference room is recognized. The content of electronic mail, documents, and so forth, of the portable terminal can thus be freely printed out without any special work to set the printer being required.

Moreover, when a cellular phone and a PDA are equipped with this wireless link function, the PDA is able to serve as a display for the cellular phone. If a user desires to see a certain home page, the PDA is wirelessly linked to the cellular phone in his or her bag to permit access to the Internet.

Furthermore, when a cellular phone and digital camera are equipped with this wireless link function, images taken by the digital camera can be linked to the cellular phone via a wireless link to allow images to he transmitted over the Internet.

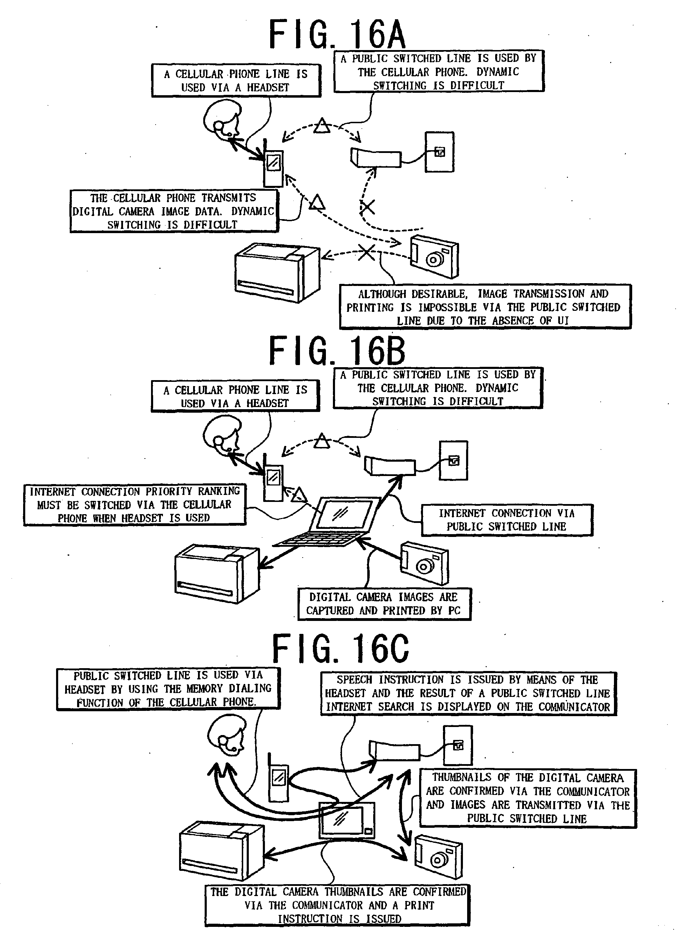

The wireless link is essentially wirelessly linked to all built-in devices. However, in reality, a wireless-link rule (profile) enabling a mutual connection must be installed beforehand in the unit main body of the relevant wireless link built-in device. Further, even when the desired connection profile has been installed, this profile is fixed, and hence it is not possible to dynamically switch the connection for a plurality of wireless link built-in devices (see Fig. 16(a) and 16(b)).

For example, when settings are in place for a telephone call via a headset by using the cellular phone, although there are no problems in an outdoor location, when a modem connected to a less expensive public switched telephone line is used indoors, the profile must be reset. Further, when settings are in place to transmit digital camera image data by means of the cellular phone, the profile must be reset in order to perform printing by means of a printer situated indoors. A conventional device/system thus places a burden on the user who is thus compelled to perform this resetting, and hence long-awaited usability via a wireless link is compromised. Originally, a dynamic mutual connection between electronic devices was desirably established so that a telephone call was conducted via a cellular phone outdoors but via a public switched line indoors.

WO-A-99/22493 discloses a wireless local area network (LAN) in which a server device which may be in the form of a mobile station carried by a user, sets up a connection to the LAN for transferring information between itself and a device connected to the LAN using link agents which can be transferred from one device to another. Tasks defined for the link agents include status detection, transmission of status data e.g. to the server device, e-mail delivery and printing with a printer connected to the LAN. The server device monitors the LAN and maintains status information on the peripheral devices of the LAN. A user enters an office or the like where such peripheral device exist, and by exchange of link agents the mobile server device obtains and stores configuration data about the peripheral devices. Server devices carried by different users can set up respective LANs allocated respective ID codes, e.g. the ID codes of the different server devices thus, for example, the peripheral devices of an office can be available to several users.

US 5, 838, 926 discloses a LAN structure wherein a data process apparatus judges its setting position within the LAN, sorts the data processing apparatuses of the LAN, displays the sorted apparatus which should perform requested data processing, and indicates the selected apparatus to perform the processing.

### DISCLOSURE OF THE INVENTION

The present invention was conceived in order to resolve this problem, and it is an object thereof to provide an apparatus and a mutual device connection method using a wireless link, a mutual device connection usable scene table creation method, and a medium for recording a program that are capable of smoothly establishing a mutual connection of electronic devices having a built-in wireless link device and that allow the combination of devices to be varied dynamically in accordance with the status and/or application.

According to one aspect there is provided a mutual device connection apparatus using a wireless link, comprising: a wireless communication section; a useable scene that relates to the mutual connection of a plurality of electronic devices that are present in each of a plurality of useable scenes, and information relating to one or a plurality of specific electronic devices unique to the usable scenes for specifying which of the plurality of usable scenes the current usable scene is; a processing unit for mutually connecting electronic devices that are present in a communicable range by means of the wireless communication section, and a priority ranking reference memory for storing a priority ranking for creating information relating to the mutual connection of the plurality of electronic devices, wherein: the processing unit is adapted to capture information on the electronic devices that are present in the communication range via the wireless communication section, to judge a usable scene by comparing the captured information with information relating to specific electronic devices in the usable scene memory, to read information that is optimum for the judged usable scene among the information on each usable scene relating to the mutual connection of the electronic devices from the usable scene memory on the basis of the judgment result, and to mutually connect the electronic devices that are present in the communication range on the basis of the read information relating to the mutual connection of the electronic devices; the processing unit is also adapted to display a list of said electronic devices that are present in the communication range, to register one or more unique electronic devices, included in this list and capable of specifying a usable scene, in the usable scene memory as information for specifying in advance said usable scene, to create information relating to the mutual connection of the plurality of electronic devices included in the list on the basis of the priority ranking reference memory, to store this information in the usable scene memory; and to display the selection of a mobile scene that corresponds to scenes other than scenes that have been specified in advance, wherein said display includes the selection between a mobile priority prioritizing the setting of the one or more unique electronic devices and a scan priority prioritizing the connection of an electronic device that is detected within said communication range.

According to another aspect there is provided a mutual device connection usable scene table creation method, comprising the steps of: preparing a mutual device connection apparatus that comprises a wireless communication section; a usable scene table containing information relating to a mutual connection of a plurality of electronic devices that are present in a predetermined usable scene and information for specifying the usable scene; a priority ranking reference table for storing the priority ranking of the mutual connection of the plurality of electronic devices; and a processing unit for mutually connection, by means of the wireless communication section, the electronic devices that are present in a communicable range; scanning electronic devices that are present in the communicable range by means of the mutual device connection apparatus and displaying a list of these electronic devices; registering, in the usable scene table, one or more unique electronic devices from the list that are capable of specifying a usable scene; creating information relating to the mutual connection of the electronic devices in the list; setting the priority ranking of the mutual connection of the electronic devices on the basis of the priority ranking reference table; storing the created information relating to the mutual connection of the electronic devices in the usable scene table; and displaying the selection of a mobile scene that corresponds to scenes other than scenes that have been specified in advance, said displaying includes the selection between a mobile priority prioritizing the setting of the one or more unique electronic devices and a scan priority prioritizing the connection of an electronic device that is detected within said communication range.

The medium for recording a program according to the present invention records a program allowing a computer to execute the above method.

Media include, for example, flexible disks, hard disks, magnetic tape, magneto-optical disks, CDs (including CD-ROM, Video-CD), DVDs (including DVD-Video, DVD-ROM, and DVD-RAM), ROM cartridges, RAM memory cartridges with battery backup, flash memory cartridges, nonvolatile RAM cartridges, and so forth.

Media are recorded with information (mainly digital data and programs) using physical means of any kind and allow a processing device such as a computer or dedicated processor to execute predetermined functions. In conclusion, a program may be downloaded to a computer by means of any means so as to execute predetermined functions.

### BRIEF DESCRIPTION OF THE DRAWINGS

Fig. 1 shows the constitution of an apparatus (communicator) according to a first embodiment of the invention.
Fig. 2 is an explanatory view of usable scenes, where Fig. 2 (a) shows a "home" usable scene, and Fig. 2 (b) shows a "company" usable scene.
Fig. 3 is a flowchart of an electronic device registration procedure.

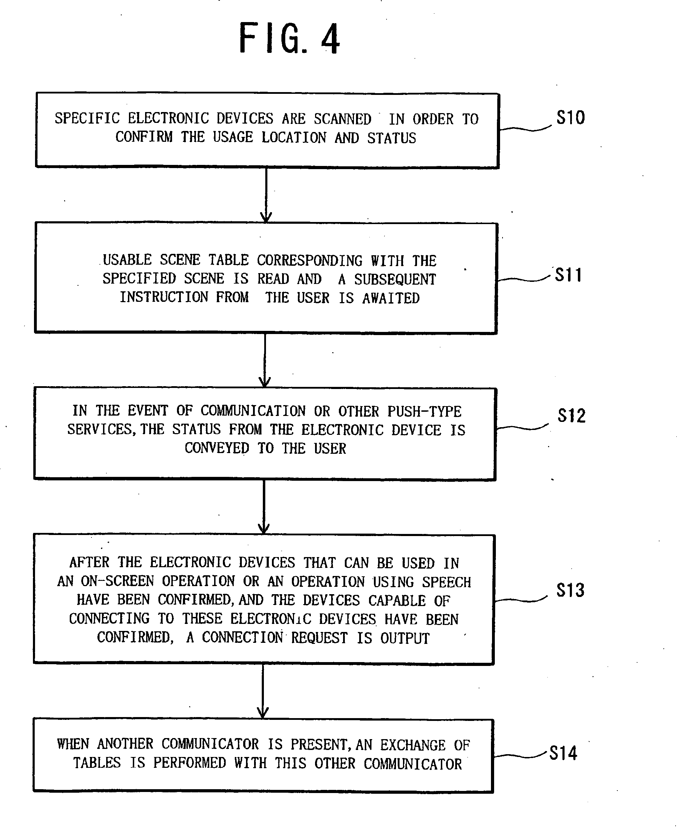

Fig. 4 is a flowchart of a procedure for mutually connecting electronic devices.
Fig. 5 is an example of a usable scene table.
Fig. 6 is an example of specific electronic device registration screens, where Fig. 6(a) shows a "home" case, and Fig. 6(b) shows a "company" case.
Fig. 7 is an example of electronic device registration screens of a "mobile" usable scene.
Fig. 8 is an example of a menu display screen of the communicator.
Fig. 9 is an example of a current connection status display screen of the communicator.
Fig. 10 is an example of a mobile setting display screen of the communicator.
Fig. 11 is an example of the home setting display screen of the communicator.
Fig. 12 is an example of a new location (scene) creation display screen of the communicator.
Fig. 13 is an example of a location (scene) editing display screen of the communicator.
Fig. 14 is an explanatory view of the system according to the second embodiment of the invention.
Fig. 15 is a processing flowchart according to the second embodiment of the invention.
Fig. 16 provides images for a conventional wireless link connection (Figs. 16(a) and 16(b)), and an image for the connection of the communicator pertaining to the embodiments of the invention (Fig 16(c)).

### REST MODE FOR CARRYING OUT THE INVENTION

### First Embodiment of the Invention

The apparatus (communicator)/method (electronic device mutual connection method) according to the first embodiment of the invention will now be described with reference to the drawings.

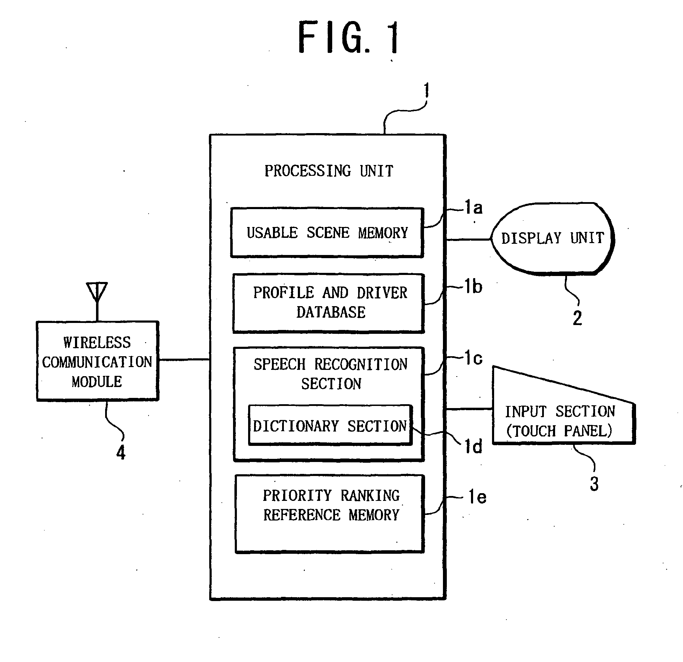

Fig. 1 is a function block diagram of the communicator. A processing unit 1 establishes a mutual connection between electronic devices by scanning an effective range of approximately 10 meters (sometimes also on the order of 100 meters), creating a list of the electronic devices preset in this range, and then referencing a memory (table) 1a and a database 1b. The processing unit 1 corrects the table when the actual conditions differ from the table. The scan result is displayed on a display unit 2, and, upon seeing this displayed scan result, the user issues an instruction to connect the electronic devices by means of a popup command and inputs correction information and so forth via an input section 3. Further, the processing unit 1 comprises a speech recognition section 1c and a dictionary section 1d, and hence operation is also possible using speech. The respective statuses of the electronic devices are displayed on the display unit 2 and can be centrally managed here. A priority ranking reference memory 1e stores the electronic device mutual connection priority ranking for the automatic creation of a mutual connection rule table for a plurality of electronic devices.

The processing unit 1 communicates with other electronic devices via a wireless communication module 4. Although not illustrated, the other electronic devices each comprise a wireless module. The wireless module 4 is one-chip module about 8 mm in size whose output is small, whereby the electric power consumption thereof is also extremely small (during transmission: 20mW to 30mW, standby: 0.3 mW). In addition, in order to suppress the electric power consumption, an adhoc connection is established rather than a continuous connection such as that of an ordinary wireless LAN. The maximum data transmission speed of the wireless module is 1 Mbps. The wireless module performs frequency hopping in which the frequency is varied in short cycles during a transmission, prevents interference with other wireless communications, and reduces the effects of crosstalk and noise. The usable frequency bandwidth is the 2.4GHz band. A unique device address is assigned to an electronic device with a built-in wireless module.

In the case of the wireless link known as Bluetooth (Trademark), each electronic device fulfils the role of master or slave. Because, when communication takes place between a master and slave, the unique address and clock value of the master are employed, frequency synchronization is performed by calculating the same hopping pattern. However, in an initial stage in which the communication is started, hopping pattern synchronization must be attempted by relaying the unique address and clock value of the master to the slave. For this reason, in the stage in which communication is started, an inquiry procedure or paging procedure is executed. A description of these procedures will be provided subsequently. Further, the relationship between the master and slave is required to the end for management of the communication channel for frequency hopping, and is not directly related to the actual communication content. In addition to a one-to-one relationship between the master and slave, it is possible to simultaneously connect seven slaves to one master (more accurately speaking, the communication channel is shared).

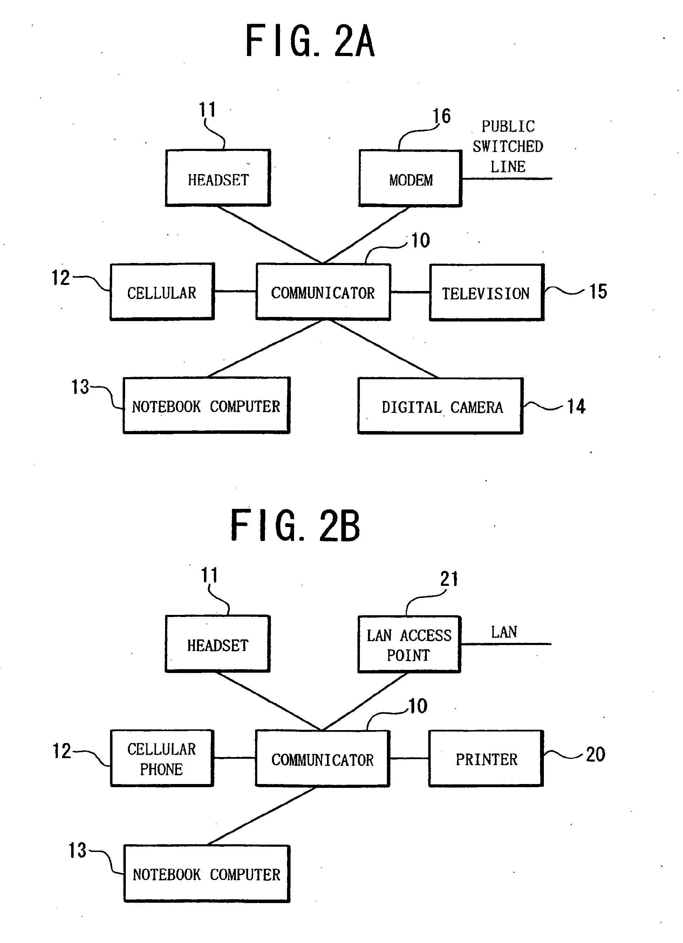

The communicator in Fig. 1 is a small terminal with a touch-panel type liquid crystal screen. For example, the communicator is implemented in a PDA and employed in a variety of environments. For example, the communicator is used in the environment shown in Fig. 2(a) (equivalent to "home") and the environment shown in Fig. 2(b) (equivalent to "company"). The communicator 10 scans the surrounding area, compiles a list of electronic devices in the effective range, automatically judges what the current environment is, and establishes the optimum mutual connection of electronic devices in accordance with the judgment result. For example, when, in the home environment of Fig. 2 (a), a cellular phone 12 is used to make a call, the cellular phone 12 is connected to a modem 16 to use a public switched line. As a result, a public switched line with lower calling costs can be used. On the other hand, in the company environment of Fig. 2 (b), although a public switched line is not used when a call is made using the cellular phone 12, a LAN access point 21 is used when the Internet is used by a notebook computer 13. The communicator 10 thus dynamically changes the electronic device mutual connection in accordance with the environment.

In order to implement this function, the processing unit 1 of the communicator 10 is provided with a usable scene memory 1a, and a profile and driver database 1b. States in which the electronic devices are mutually connected are preset in the usable scene memory 1a for each environment (usable scene). Profiles and drivers for the electronic devices are stored in the profile and driver database 1b. A profile determines how a protocol for communication using the wireless communication module 4 is used. Profiles include profiles for performing basic communication and profiles that differ according to the intended usage at a level close to an application. A driver is a program required in order to use the electronic devices.

Next, the operation will be described.

The communicator 10 comprises: (1) a function for creating and correcting a table; and (2) a function for mutually connecting electronic devices by referencing the table.

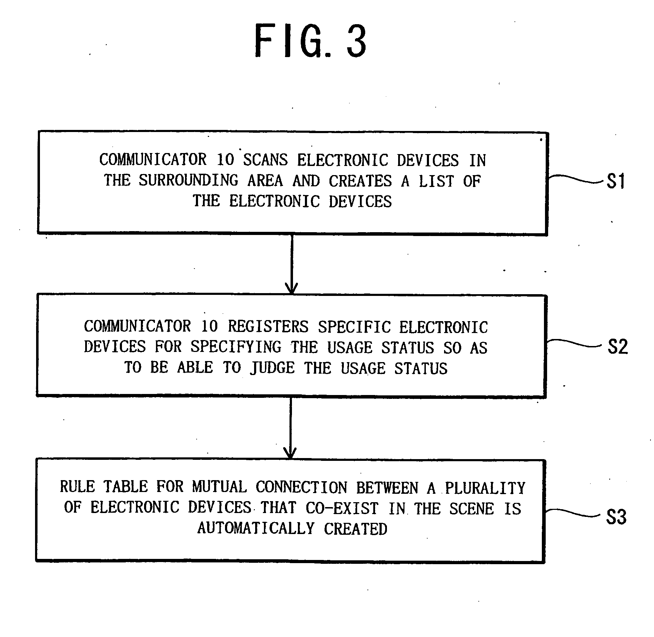

First, the function (1) will be described with reference to Fig. 3.

S1: the communicator 10 scans electronic devices in the vicinity and creates a list of these electronic devices.

A check is made of what kind of electronic devices are present in the communication range of the communicator 10 in accordance with an inquiry procedure or paging procedure. An inquiry procedure is a procedure that is implemented when the communicator 10, which is the master, does not know what kind of electronic devices are present in the communication range. Basically, the master serially transmits broadcast packets, and the slave device, which has received these broadcast packets, sends back information relating to the slave device. A paging procedure is a procedure for a case where the master knows of the presence of a specific device in the communication range and is connected to the specific device. Basically, this paging procedure is implemented as a result of packets for a specific slave device being serially transmitted by the master and a partner slave device responding to these packets. Further, access codes are used in the electronic device identification in both of the above procedures.

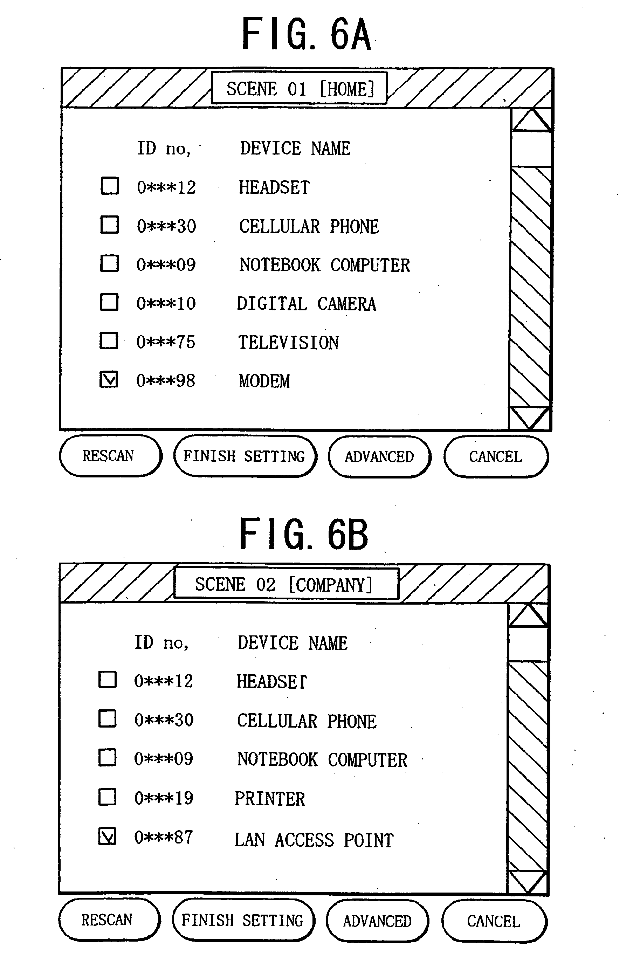

The communicator 10 scans the electronic devices in the communication range in accordance with the inquiry procedure or paging procedure. The results of this scan are displayed as shown in Figs. 6(a) and 6(b), for example. The screen displays the electronic devices with a built-in wireless link device that can be currently connected, IDs such as the wireless link access points, and names, functions, and constraints, and the like.

S2: The communicator 10 registers specific electronic devices for specifying the usage status so as to be able to judge the usage status.

The communicator 10 is used in a variety of locations. For example, the communicator 10 is used at home as shown in Fig. 2 (a), and in a company as shown in Fig. 2(b). The electronic devices connected to the communicator 10 differ from one location to the next and, even in the event that the electronic devices are the same, the connection partner, connection status, and so forth, and the usage method are different. For example, although, at home, a transmission from the cellular phone 12 is connected to the public switched line via the modem 16, in a company, a transmission from the cellular phone 12 is connected to a LAN access point (or a base station (not shown) of a cellular phone company) .

The communicator 10 implements the optimum mutual device connection for each of these different environments. In order to dynamically establish a mutual connection of the electronic devices in accordance with the usage status, the communicator 10 must first judge in which location (scene) same is located. Electronic device registration serves this purpose.

In a few scenes assumed in advance, one or a plurality of electronic devices unique to these scenes are present. For example, in Figs. 2(a) and Fig. 2(b), the modem 16 connected to the public switched line is unique to the home environment, and the LAN access point 21 connected to the LAN is unique to the company environment. It can therefore be judged that, if the modem 16 is present, the scene is the home, and, if the LAN access point 21 is present, the scene is the company. This kind of scene-specific electronic device is known as a specific electronic device. The number of specific electronic devices is not limited to one. For example, when the modem 16 and a television 15 co-exist, this scene may be judged to be the home, and, when the LAN access point 21 and the printer 20 co-exist, this scene may be judged to be the home. Alternatively, a plurality of specific electronic devices may be set and a priority ranking assigned to these devices. For example, when the modem 16 and the printer 20 are present at the same time, the modem 16 is prioritized and the scene is thus judged to be the home.

When the communicator 10 scans the electronic devices in the environments of Figs. 2(a) and 2(b), the electronic device lists shown in Figs. 6 (a) and 6 (b) are displayed. In this example, a modem, which is a "home" specific electronic device, is selected as shown in Fig. 6 (a), and a LAN access point, which is a "company" specific electronic device, is selected as shown in Fig. 6(b).

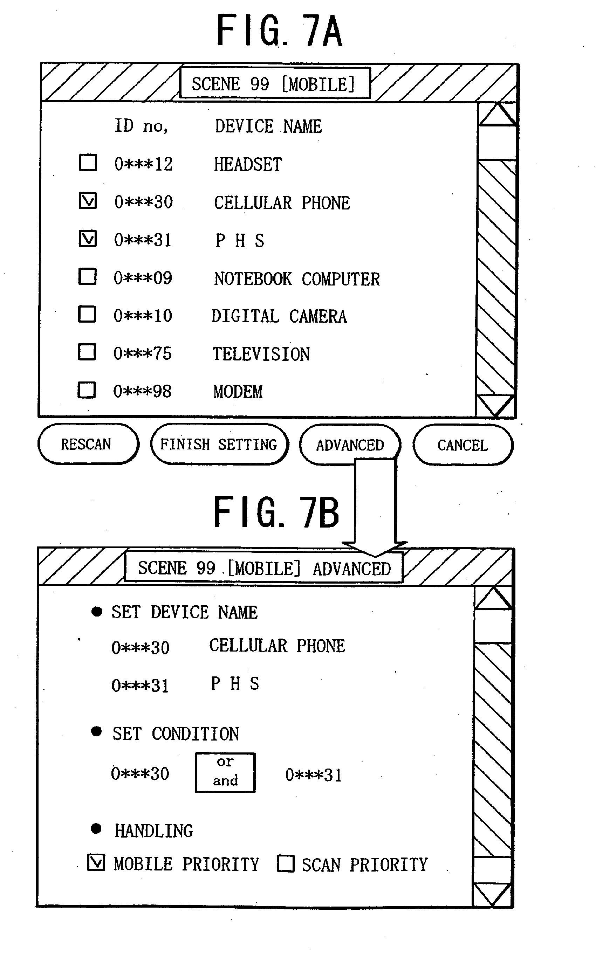

Figs. 7 (a) and 7 (b) show the procedure for setting a scene "mobile". "Mobile" corresponds to scenes other than the "home" and "company" scenes assumed beforehand. "Mobile" must be set for a connection in an optional location. In Figs. 7 (a) and 7 (b), a check mark is entered for "cellular phone" and "PHS" and, when a cellular phone and/or PHS are detected, "mobile" is judged. Further, a check mark is entered for "mobile priority" in Fig. 7 (b), this meaning that the above-mentioned specific electronic device setting is prioritized. Accordingly, "scan priority" means that a scan is performed and the connection of the detected electronic devices is prioritized.

A usage location, status, and so forth, that is set by the above procedure is called a "usable scene". A "usable scene" is displayed as a similar usage location, status, and so forth, such as that of a home, company, or automobile, or movie theater, for example. "Usable scenes" include scenes that are already set at the start when the communicator 10 is shipped and scenes that can be named as a result of a user who is using the communicator 10 making his or her own settings. Usage locations and statuses not included in each "usable scene" are set as the above-mentioned "mobile".

The communicator 10 comprises a function for simple verification during registration in order to allow nonconflicting "usable scenes" to be set. In cases where a change to the status of an electronic device is made following registration of a "usable scene", the usable scene table is updated during confirmation of the scene.

S3: A rule table for a mutual connection between a plurality of electronic devices that co-exist in the scene is automatically created.

The priority for the connection of these devices is set automatically by means of a comparison with a database prepared beforehand. The priority is assumed not only for the scene, but also for the electronic devices in the scene.

The communicator 10 automatically creates a rule table for the mutual connection of co-existing electronic devices for each usable scene. Further, where the creation of rules is concerned, in cases where the communicator 10 does not possess sufficient information, the entry of information on relevant devices is prepared in an Internet session (described later). Here, the communicator 10 also performs a check relating to the profile and the existence of a mutual connection driver, and if required, a driver, profile, or the like is downloaded from the Internet.

These rules are formed on the basis of network attributes (such as the communication costs, communication speed, distance on the network, and the type of routing network and so forth), product attributes (screen size, sound quality, and so forth), and the like.

For example, when the least expensive public switched line is usable, a telephone call via a headset 11 prioritizes the public switched line. When a plurality of communication channels can be used, the communication channel with lower fees is selected in the case of a transmission, and if the fees are the same, the communication channel with the higher transmission speed is selected. When a call is received, the communication channel with the faster transmission speed is selected irrespective of the fees. When high security is required, a point to point connection by way of a wired communication is selected, and when not required, the Internet is selected.

For example, if the received data is only text, same is displayed on the cellular phone, and when the received data includes graphics, the data are displayed on a notebook computer. Moving pictures are displayed on a television. Further, small images are displayed on a cellular phone and large images are displayed on a notebook computer. In addition, monochrome images are displayed on a cellular phone and color images are displayed on a notebook computer. If the data received are speech data, same are output to a headset or cellular phone. When speech data are stereo, same are output to a headset.

Generally, as the reference for determining the priority ranking, network attributes, product attributes, and leader and member names, and so forth, are possible. Network attributes include communication costs, communication speed, distance on the network, the type of routing network, and so forth. Product attributes include the screen size, the sound quality, and so forth. These references are pre-stored in the priority ranking reference memory 1e.

Moreover, collections of similar priority rankings such as those of automobiles or movie theaters, and so forth, may also be prepared beforehand.

These rules include rules which the main communicator 10 recommends for each scene, and rules according to which the user of the main communicator 10 selects the above-mentioned network attributes and product attributes, and so forth.

Further, the user of the main communicator 10 is able to customize rule exceptions by himself/herself.

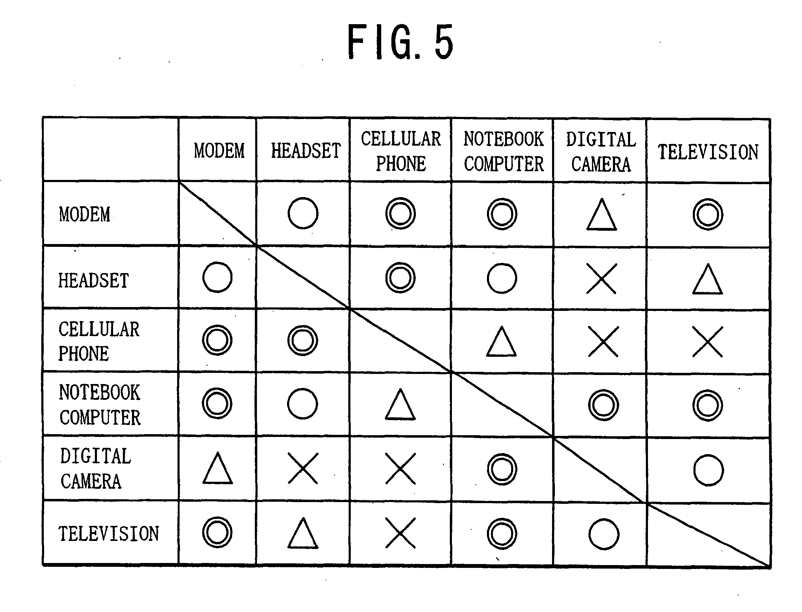

Fig. 5 shows an example of a usable scene table. This usable scene table is for using the communicator 10 at home. The symbols [circle within a circle], [empty circle], [empty triangle], and [cross] in the table indicate the connection priority level. Based on this table, the following actions are possible:
- A transmission from the cellular phone 12 is connected to a public switched line via the modem 16.
- A telephone call is made via the modem 16 by using the headset 11. Here, the telephone book in the communicator 10 is used.
- Mail is received by the communicator 10 via the modem 16 and displayed on the television 15.
- Images taken with a digital camera 14 are displayed on the television 15.
- Images taken with the digital camera 14 are adjusted by means of the notebook computer 13 and then transmitted via the modem 16.

As described above, a pre-prepared dynamic usage table and a customized version thereof are set in advance. As a result, a mutual device connection can also be easily performed on a screen by means of a device having a user interface.

The function (2) for mutually connecting electronic devices by referencing a table will be described next. S10: Specific electronic devices are scanned in order to confirm the usage location and status, and so forth.

A check of whether electronic devices set in S2 are present in the communication range of the communicator 10 is performed and a scene is specified, in accordance with the inquiry procedure or paging procedure.

When the communicator 10 has not detected the "usable scene", the "mobile" setting is activated.

Alternatively, when a new scan is performed and a connectable electronic device terminal is confirmed, a screen encouraging the setting of a usage rule is activated.

S11: The usable scene table corresponding with the specified scene is read and a subsequent instruction from the user is awaited.

A table is read from the usable scene memory 1a on the basis of the above-mentioned scan.

The communicator 10 mutually connects the electronic devices capable of communication in accordance with the table thus read.

S12: In the event of communication or other push-type services and the like, the status from the electronic device is conveyed to the user.

S13: After the electronic devices that can be used in an on-screen operation or an operation using speech have been confirmed, and the devices capable of connecting to these electronic devices have been confirmed, a connection request is output.

S14: An exchange of tables is undertaken with another communicator 10.

In a case where another one or more other communicators 10 are present in the communication range of the communicator 10, each communicator 10 performs a table exchange with respect to the other communicator 10 to update the tables carried by the communicator 10. There are also cases where the communicator 10, which has already communicated with a plurality of communicators 10 and whose tables have been updated, transmits updated tables to a newly communicating communicator 10 in bulk form. In such a case, the communicators 10 naturally have a layered structure. For example, when devices are connected to the communicator 10 in layers, devices are also connected to the receiving communicator 10 in layers.

In the above processing, although the communicator 10 establishes a connection as the "master", when any device is set as the "master" after the connection is complete, the communicator 10 is relieved of its work.

Further, when the user always updates the priority ranking himself/herself, there is the possibility of continuously receiving priority ranking update requests as the user moves around. In this case, it is possible to select a "silent" setting in which priority ranking update requests are not received separately and an "acceptable" setting in which priority ranking update requests are received.

Communications with an electronic device that has been set with a restriction on communications are disabled or restricted. For example, when there is a desire to not allow a certain electronic device to communicate with any electronic device, the electronic device is afforded the setting "private" electronic device. When communications with any electronic device are acceptable, the electronic device is set as a "public" electronic device. Further, when there is a desire to restrict communication partners, the electronic device is set as a "protected" electronic device. A protected electronic device is able to communicate only with electronic devices belonging to a certain group. Further, this setting can be chosen as temporary or permanent. The communication partner restriction can be performed batchwise by delegating a leader (master). That is, this means that when a certain leader is set as private, the members managed by this leader are also all set as private.

Further, the forms of communication differ depending on which electronic devices the functions of the communicator 10 are built into. There are three communication types.
(1) First of all, the simplest case is one in which the functions of the communicator 10 are built into all of the electronic devices. In this case, even in the event that a master (leader) is not present among the electronic devices, a table can be created by exchanging information with individual electronic devices. Then, in accordance with the table thus created, communication takes place between the user's electronic device and the electronic devices in each scene by means of p2p (peer to peer) communication on the basis of an instruction from a master with the table.
   When the functions of the communicator 10 are built into the leader but not into members constituting devices other than the leader, two forms are feasible.
(2) One such form is that of a case where a profile known as a "remote control profile" or a driver known as a "remote control driver" is built into the members. This profile/driver fulfils the function of receiving commands and parameters relating to communications from other electronic devices. That is, when this profile/driver is built in, communication with a partner is restricted for third parties. In this case, each member communicates by way of p2p by receiving instructions relating to the communication destination, communication path, and communication form, and so forth, from the leader via the profile/driver.
(3) Another form in a case where the functions of the communicator 10 are built into the leader but not into the members is a case not involving p2p communication. In other words, this is a case where communication takes place via the leader. Also, depending on the profile, there is a case where leaders actively communicate with members managed thereby and the content of these communications is transferred by the leaders, and a case where a leader plays the part of a TCP/IP Proxy server and communications are made between members transparently.

In the case of the communicator 10 according to the present invention, the following actions can be easily implemented and, in so doing, optimum devices can be combined for each location (scene).
- A telephone call is made from a headset via a public switched line by using the memory dialing function of the cellular phone.
- A speech instruction is issued by means of the headset to perform an Internet search via the public switched line, and the result is displayed on the screen of the communicator 10 according to the present invention.
- When digital camera image data are transmitted, thumbnails of the digital camera image data are displayed and confirmed on the screen of the communicator 10 according to the present invention, whereupon predetermined image data are transmitted via the public switched line.
- In a case where the digital camera image data is printed, thumbnails of the digital camera image data are displayed and confirmed on the screen of the communicator 10 according to the present invention, whereupon predetermined image data are sent to a printer to be printed.
- The communicator captures information from an electronic device outside the communication range via an electronic device in the communication range and acts as an intermediary in the mutual connection between these electronic devices.

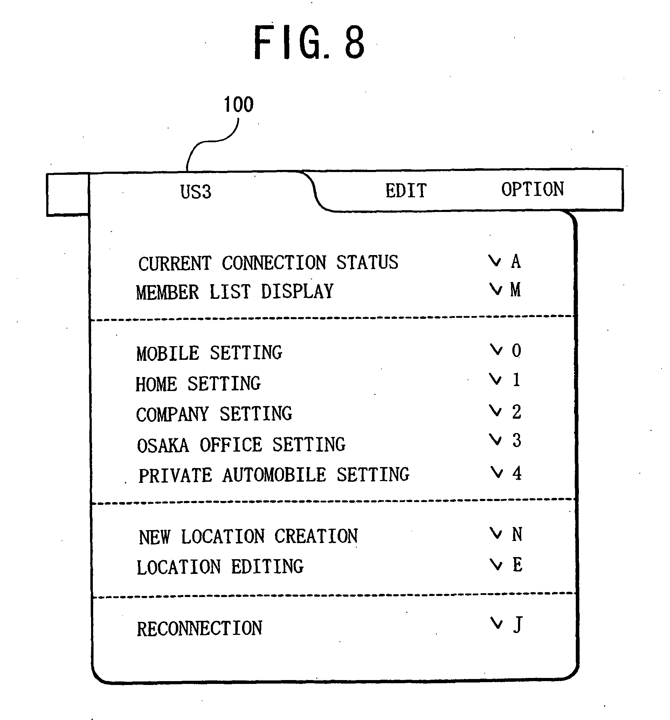

Other examples of operation screens of the communicator 10 are shown in Figs. 8 to 13. In these drawings, a "location" is a "scene".

Fig. 8 shows a basic menu screen 100 of the communicator 10.

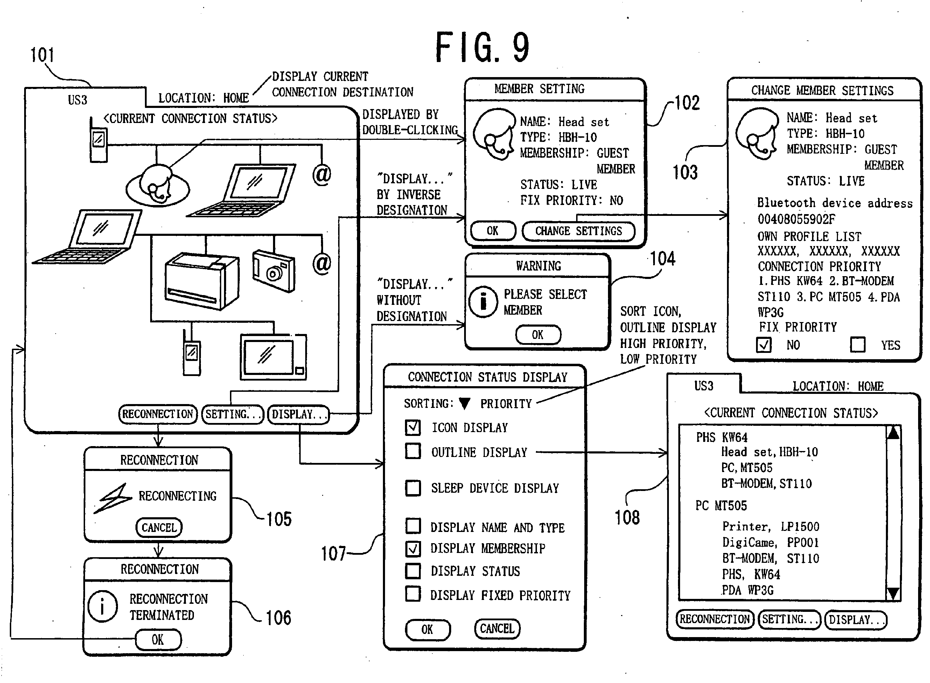

Fig. 9 shows a current connection status screen 101. Screen 101 is an icon display. Member (electronic device) setting and setting changes (screens 102 and 103) are possible by means of the setting button on screen 101. Likewise, reconnection is possible by means of the reconnect button (screens 105, 106). Similarly, the connection status can be displayed (screens 107 and 108) by means of the display button.

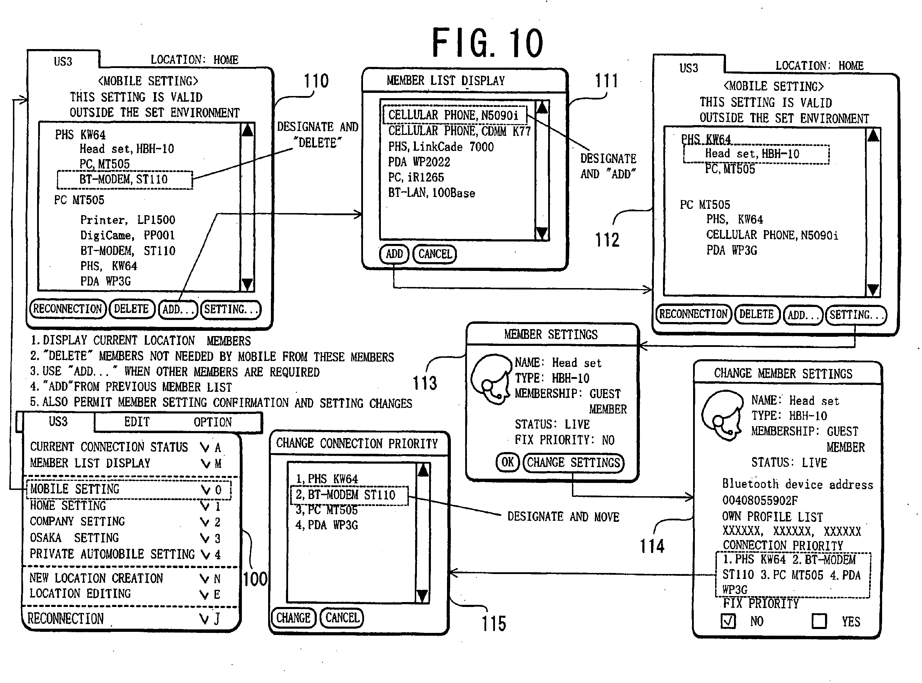

Fig. 10 shows a mobile setting screen 110. The mobile setting is absolutely necessary at the very start. This screen corresponds with Fig. 7.

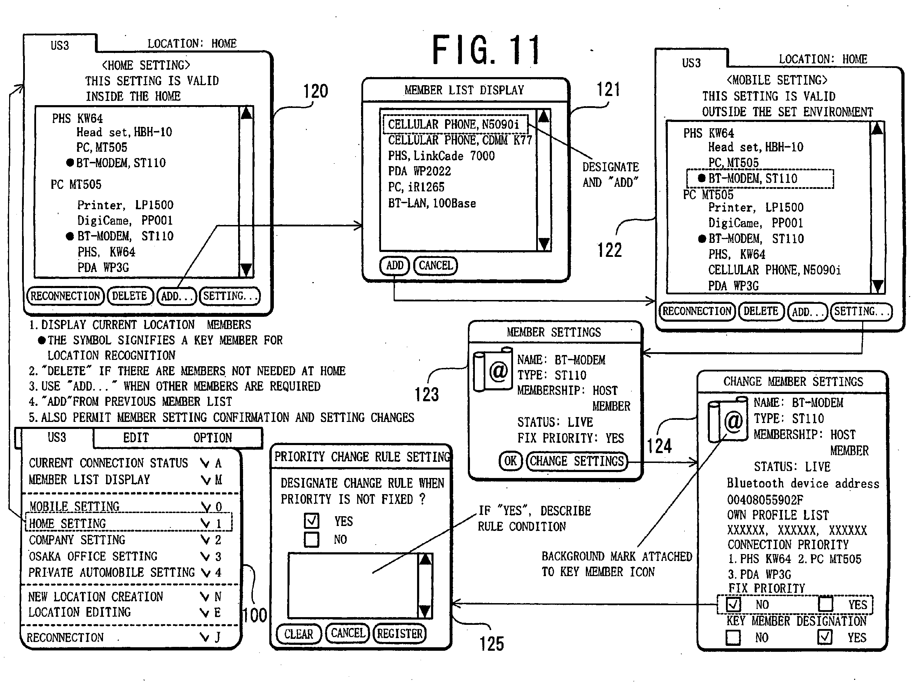

Fig. 11 shows a home setting screen 120. This screen corresponds with Fig. 6(a). Further, "key member" in the figure signifies a specific electronic device for specifying the location (scene).

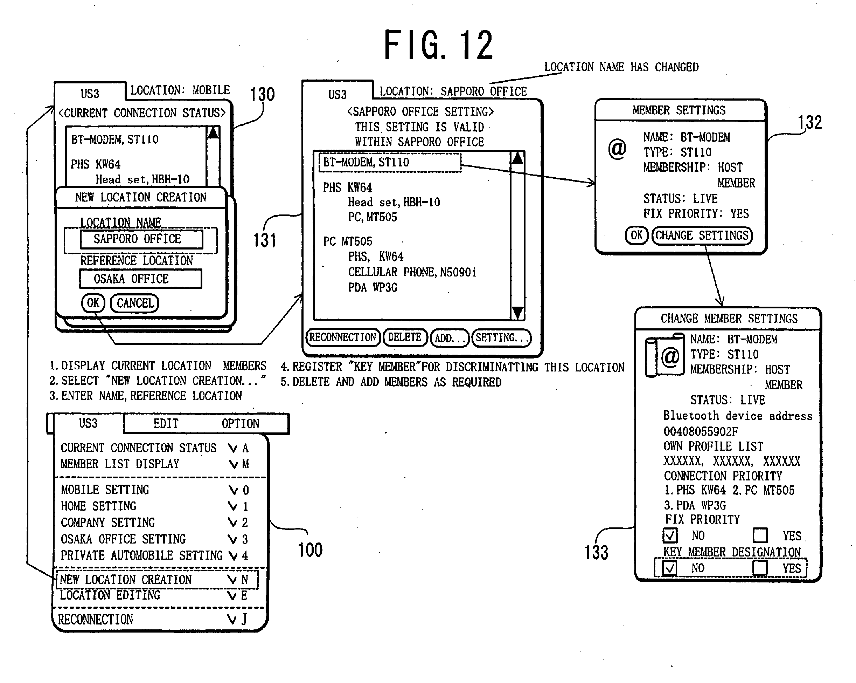

Fig. 12 shows a new location (scene) creation screen 130. When a new location is created, reference can be made to the content of an existing location. Key member (specific electronic device) registration is performed (screen 133) as required.

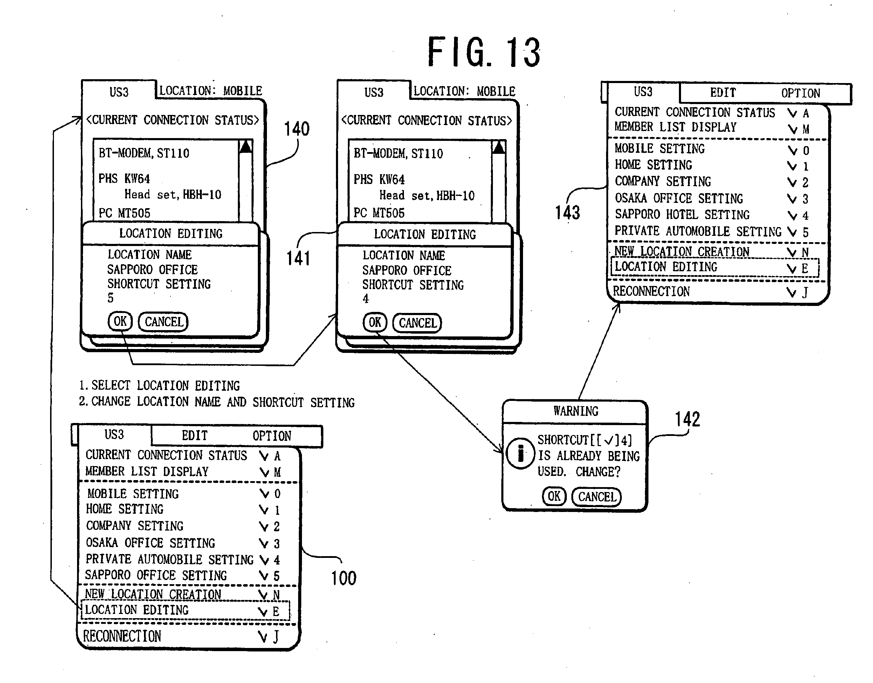

Fig. 13 shows a location (scene) editing screen 140. The location name and shortcut setting can be changed.

Fig. 16(c) shows an image of the connection of the communicator according to the embodiments of the present invention.

### Modified example of the first embodiment of the invention

Although "scene" and "location" were not distinguished in the above first embodiment of the invention, "scene" and "location" may be given different meanings.

A "scene" is defined as a "conference room", "home" or "company", as described above, and a "location" indicates the raw location. For example, when there is a communicator in a vehicle parked in a garage in the "home", devices in "vehicles" can be targeted in addition to devices in the "home". Thus, dynamic connections can also be made by dividing scene and location.

### Second embodiment

In order to perform a remote control operation of an electronic device such as a digital appliance with a built-in wireless communication module, mounting a device management screen supply section constituting embedded software in each electronic device may be considered. The browser may be used to allow the communicator according to the embodiments of the present invention to work in sympathy with the remote control operation.

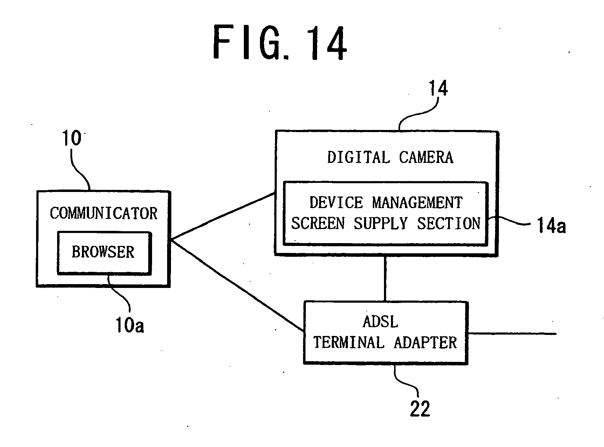

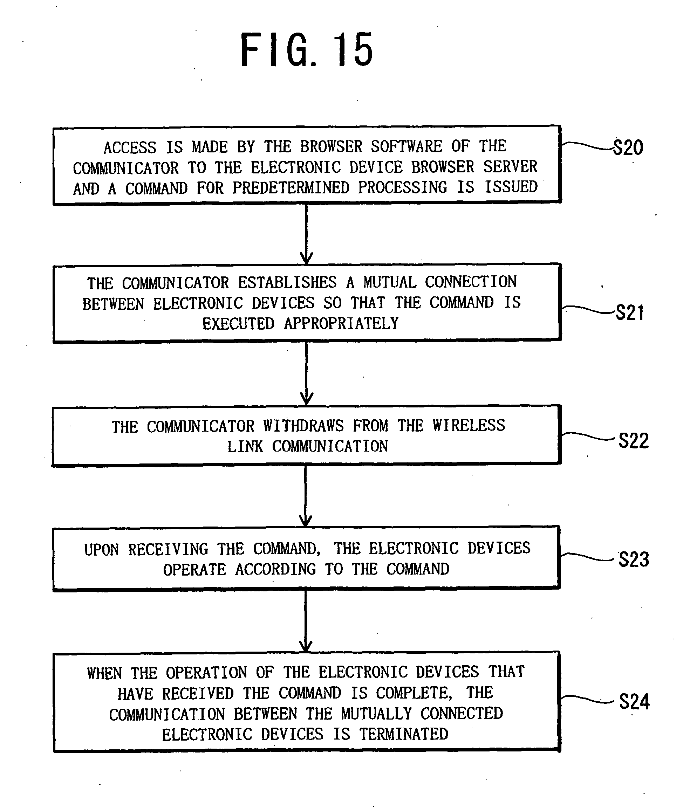

For example, in the case of the system shown in Fig. 14, the procedure shown in Fig. 15 is performed when a user sends photographs stored in the digital camera to a friend via ADSL.
- First of all, browser software loaded in the user's communicator 10 accesses the device management screen supply section of the digital camera 14 via the wireless communication module, and the fact that there is a desire for images to be sent via ADSL is communicated to the digital camera 14 (S20). This operation can be performed by means of a procedure like that for ordinary remote control. A device management screen supply section 14a supplies device setting and management screens to the communicator 10, functioning like a WWW server, for example, and is capable of displaying a device management screen via a browser 10a of the communicator 10.
- The digital camera 14, which has thus received a command, operates in accordance with this command (S23). In this case, the digital camera 14 sends images to an address designated via an ADSL terminal adapter (not shown).
- The communicator 10 manages the connection of each device together with the browser operation so that this operation can be performed smoothly. For example, when the user issues the above command to the digital camera 14 by means his or her communicator 10 in the same way as remote control is performed, the communicator 10 automatically connects the digital camera 14 to the ADSL terminal adapter (S21) . Then, when the command is completed, the communicator 10 automatically withdraws from the communication between both parties (S22). Further, when all the images have been transmitted from the digital camera 14 to the ADSL terminal adapter, the communication between the digital camera 14 and the ADSL terminal adapter is terminated (S24).

According to the second embodiment of the present invention, a mutual connection between electronic devices can be implemented simply so as to operate by means of ordinary remote control. The optimum mutual connection can be implemented for each scene by using the usable scene memory 1a and the priority ranking reference memory 1e of the first embodiment of the invention.

Although not illustrated, the communicator 10 of Fig. 14 further comprises the elements of Fig. 1 (the usable scene memory 1a, profile and driver database 1b, speech recognition section 1c, dictionary section 1d, priority ranking reference memory 1e, display unit 2, input section 3, and wireless communication module 4. Further, because the procedure of the first embodiment of the invention includes the application of priority rankings, this procedure can be applied in full to Figs. 14 and 15.

As described above, according to the present invention, because a usable scene table is provided, a mutual connection between electronic devices with a built-in wireless link device can be established smoothly and the combination of devices can be varied dynamically in accordance with the status and/or application.

It goes without saying that the present invention is not limited to or by the above embodiments and that a variety of changes can be made within the scope of the invention defined in the claims, and that these modifications are also included in the scope of the present invention.

Moreover, in this specification, "means" does not necessarily signify physical means alone and also includes cases where the functions of the means are implemented by software. In addition, the functions of one means may also be implemented by two or more physical means or the functions of two or more means may be implemented by one physical means.

## Claims

1. A mutual device connection apparatus using a wireless link, comprising:
a wireless communication section (4);
a usable scene memory (1a) that contains information on each usable scene (SCENE 01, SCENE 02) that relates to the mutual connection of a plurality of electronic devices (11-16; 11-13, 20, 21) that are present in each of a plurality of useable scenes, and information relating to one or a plurality of specific electronic devices unique to the usable scenes for specifying which of the plurality of usable scenes the current usable scene is;
a processing unit (1) for mutually connecting electronic devices that are present in a communicable range by means of the wireless communication section, and
a priority ranking reference memory (le) for storing a priority ranking for creating information relating to the mutual connection of the plurality of electronic devices, wherein:
the processing unit is adapted to capture information on the electronic devices that are present in the communication range via the wireless communication section, to judge a usable scene by comparing the captured information with information relating to specific electronic devices in the usable scene memory, to read information that is optimum for the judged usable scene among the information on each usable scene relating to the mutual connection of the electronic devices from the usable scene memory on the basis of the judgment result, and to mutually connect the electronic devices that are present in the communication range on the basis of the read information relating to the mutual connection of the electronic devices;
the processing unit is also adapted
to display a list of said electronic devices that are present in the communication range,
to register one or more unique electronic devices, included in this list and capable of specifying a usable scene, in the usable scene memory as information for specifying in advance said usable scene,
to create information relating to the mutual connection of the plurality of electronic devices included in the list on the basis of the priority ranking reference memory,
to store this information in the usable scene memory; and
to display the selection of a mobile scene (SCENE 99) that corresponds to scenes other than scenes that have been specified in advance, wherein said display includes the selection between a mobile priority prioritizing the setting of the one or more unique electronic devices and a scan priority prioritizing the connection of an electronic device that is detected within said communication range.

2. The mutual device connection apparatus using a wireless link according to claim 1, so adapted that when the information relating to the mutual connection of the plurality of electronic devices included in the list is created, information relating to the priority ranking of the mutual connection of all or some of the plurality of electronic devices is used by being downloaded from the Internet.

3. The mutual device connection apparatus using a wireless link according to claim 1, wherein
the priority ranking reference memory contains, as information relating to the priority ranking, at least any one of network attributes including communication costs, communication speed, distance on the network, the routing network type, and product attributes that include the screen size and sound quality.

4. The mutual device connection apparatus using a wireless link according to claim 1, further adapted to provide a function wherein, in a case where the priority ranking is changed as movement takes place, selection is made between a first setting in which priority ranking change requests are not received from outside and a second setting in which priority ranking change requests are received from outside.

5. A mutual device connection usable scene table creation method, comprising the steps of:
preparing a mutual device connection apparatus that comprises a wireless communication section (4); a usable scene table containing information relating to a mutual connection of a plurality of electronic devices (11-16; 11-13, 20, 21) that are present in a predetermined usable scene and information for specifying the usable scene; a priority ranking reference table for storing the priority ranking of the mutual connection of the plurality of electronic devices; and a processing unit (1) for mutually connecting, by means of the wireless communication section, the electronic devices that are present in a communicable range;
scanning electronic devices that are present in the communicable range by means of the mutual device connection apparatus and displaying a list of these electronic devices;
registering, in the usable scene table, one or more unique electronic devices from the list that are capable of specifying a usable scene;
creating information relating to the mutual connection of the electronic devices in the list;
setting the priority ranking of the mutual connection of the electronic devices on the basis of the priority ranking reference table;
storing the created information relating to the mutual connection of the electronic devices in the usable scene table; and
displaying the selection of a mobile scene that corresponds to scenes other than scenes that have been specified in advance, said displaying includes the selection between a mobile priority prioritizing the setting of the one or more unique electronic devices and a scan priority prioritizing the connection of an electronic device that is detected within said communication range.

6. A medium for recording a program in a mutual device connection apparatus that comprises a wireless communication section (4); a usable scene table containing information relating to a mutual connection of a plurality of electronic devices (11-16; 11-13, 20, 21) that are present in a predetermined usable scene and information for specifying the usable scene; a priority ranking reference table for storing the priority ranking of the mutual connection of the plurality of electronic devices; and a processing unit (1) which has a computer and mutually connects, by means of the wireless communication section, electronic devices that are present in a communicable range,
the program allowing the computer to execute the steps of:
scanning electronic devices that are present in the communicable range by means of the mutual device connection apparatus and displaying a list of these electronic devices;
registering, in the usable scene table, one or more unique electronic devices from the list that are capable of specifying the usable scene;
creating information relating to the mutual connection of the electronic devices in the list;
setting the priority ranking of the mutual connection of the electronic devices on the basis of the priority ranking reference table;
storing the created information relating to the mutual connection of the electronic devices in the usable scene table; and
displaying the selection of a mobile scene that corresponds to scenes other than scenes that have been specified in advance, said displaying includes the selection between a mobile priority prioritizing the setting of the one or more unique electronic devices and a scan priority prioritizing the connection of an electronic device that is detected within said communication range.

## Patentansprüche

1. Vorrichtung zur gegenseitigen Verbindung von Geräten unter Verwendung einer drahtlosen Verbindung, die Folgendes umfasst:
einen Drahtloskommunikationsabschnitt (4);
einen Speicher (1a) für verwendbare Szenen, der Informationen über jede verwendbare Szene (SCENE 01, SCENE 02), die die gegenseitige Verbindung mehrerer elektronischer Geräte (11 bis 16; 11 bis 13, 20, 21), die in jeder der mehreren verwendbaren Szenen vorhanden sind, betreffen, und Informationen enthält, die eines oder mehrere spezifische elektronische Geräte betreffen, die für die verwendbaren Szenen eindeutig sind, um anzugeben, welche der mehreren verwendbaren Szenen die gegenwärtig verwendbare Szene ist;
eine Verarbeitungseinheit (1) zum gegenseitigen Verbinden elektronischer Geräte, die in einem kommunikationsfähigen Bereich vorhanden sind, mittels des Drahtloskommunikationsabschnitts, und
einen Prioritätsrangordnungs-Refarenzspeicher (1e) zum Speichern einer Prioritätsrangordnung zum Erzeugen von Informationen, die die gegenseitige Verbindung der mehreren elektronischen Geräte betreffen, wobei:
die Verarbeitungseinheit angepasst ist, um über den Drahtloskommunikationsabschnitt Informationen über die elektronischen Geräte zu erfassen, die im Kommunikationsbereich vorhanden sind, um eine verwendbare Szene durch Vergleichen der erfassten Informationen mit Informationen zu beurteilen, die spezifische elektronische Geräte im Speicher für verwendbare Szenen betreffen, um Informationen, die für die beurteilte verwendbare Szene unter den Informationen über jede verwendbare Szene, die die gegenseitige Verbindung der elektronischen Geräte betreffen, optimal sind, vom Speicher für verwendbare Szenen auf der Grundlage des Beurteilungsergebnisses zu lesen, und um die elektronischen Geräte, die im Kommunikationsbereich vorhanden sind, auf der Grundlage der gelesenen Informationen, die die gegenseitige Verbindung der elektronischen Geräte betreffen, gegenseitig zu verbinden;
die Verarbeitungseinheit auch für Folgendes angepasst ist:
zum Anzeigen einer Liste der elektronischen Geräte, die im Kommunikationsbereich vorhanden sind,
zum Eintragen eines oder mehrerer eindeutiger elektronischer Geräte, die in dieser Liste eingeschlossen sind und in der Lage sind, eine verwendbare Szene anzugeben, im Speicher für verwendbare Szenen als Informationen, um die verwendbare Szene im Voraus anzugeben,
zum Erzeugen von Informationen, die die gegenseitige Verbindung der mehreren elektronischen Geräte betreffen, die in der Liste eingeschlossen sind, auf der Grundlage des Prioritätsrangordnungs-Referenzspeichers,
zum Speichern dieser Informationen im Speicher für verwendbare Szenen; und
zum Anzeigen der Auswahl einer mobilen Szene (SCENE 99), die anderen Szenen als Szenen entspricht, die im Voraus angegeben wurden, wobei die Anzeige die Auswahl zwischen einer mobilen Priorität, die der Einstellung des einen oder der mehreren eindeutigen elektronischen Geräte die Priorität gibt, und einer Abfragepriorität umfasst, die der Verbindung eines elektronischen Geräts die Priorität gibt, das innerhalb des Kommunikationsbereichs ermittelt wird.

2. Vorrichtung zur gegenseitigen Verbindung von Geräten unter Verwendung einer drahtlosen Verbindung nach Anspruch 1, die derart angepasst ist, dass, wenn die Informationen erzeugt werden, die die gegenseitige Verbindung der mehreren elektronischen Geräte betreffen, die in der Liste eingeschlossen sind, Informationen, die die Prioritätsrangordnung der gegenseitigen Verbindung aller oder einiger der mehreren elektronischen Geräte betreffen, verwendet werden, indem sie vom Internet heruntergeladen werden.

3. Vorrichtung zur gegenseitigen Verbindung von Geräten unter Verwendung einer drahtlosen Verbindung nach Anspruch 1, wobei
der Prioritätsrangordnungs-Referenzspeicher als Informationen, die die Prioritätsrangordnung betreffen, mindestens eines von Netzattributen enthält, die Kommunikationskosten, Kommunikationsgeschwindigkeit, Distanz auf dem Netz, den Routingnetztyp und Produktattribute umfassen, die die Bildschirmgröße und die Tonqualität umfassen.

4. Vorrichtung zur gegenseitigen Verbindung von Geräten unter Verwendung einer drahtlosen Verbindung nach Anspruch 1, die ferner angepasst ist, um eine Funktion bereitzustellen, in der, im Falle, in dem die Prioritätsrangordnung sich ändert, wenn eine Bewegung erfolgt, eine Auswahl zwischen einer ersten Einstellung, in der Prioritätsrangordnungs-Änderungsanforderungen nicht von außerhalb empfangen werden, und einer zweiten Einstellung getroffen wird, in der Prioritätsrangordnungs-Änderungsanforderungen von außerhalb empfangen werden.

5. Verfahren zum Erzeugen von Tabellen für verwendbare Szenen zur gegenseitigen Verbindung von Geräten, das die folgenden Schritte umfasst:
Vorbereiten einer Vorrichtung zur gegenseitigen Verbindung von Geräten, die einen Drahtloskommunikationsabschnitt (4); eine Tabelle für verwendbare Szenen, die Informationen, die eine gegenseitige Verbindung mehrerer elektronischer Geräte (11 bis 16; 11 bis 13, 20, 21) betreffen, die in einer vorbestimmten verwendbaren Szene vorhanden sind, und Informationen zum Angeben der verwendbaren Szene enthält; eine Prioritätsrangordnungs-Referenztabelle zum Speichern der Prioritätsrangordnung der gegenseitigen Verbindung der mehreren elektronischen Geräte; und eine Verarbeitungseinheit (1) zum gegenseitigen Verbinden der elektronischen Geräte, die in einem kommunikationsfähigen Bereich vorhanden sind, mittels des Drahtloskommunikationsabschnitts umfasst;
Abfragen elektronischer Geräte, die im kommunikationsfähigen Bereich vorhanden sind, mittels der Vorrichtung zur gegenseitigen Verbindung von Geräten und Anzeigen einer Liste dieser elektronischen Geräte;
Eintragen eines oder mehrerer eindeutiger elektronischer Geräte von der Liste, die in der Lage sind, eine verwendbare Szene anzugeben, in der Tabelle für verwendbare Szenen;
Erzeugen von Informationen, die die gegenseitige Verbindung der elektronischen Geräte in der Liste betreffen;
Einstellen der Prioritätsrangordnung der gegenseitigen Verbindung der elektronischen Geräte auf der Grundlage der Prioritätsrangordnungs-Referenztabelle;
Speichern der erzeugten Informationen, die die gegenseitige Verbindung der elektronischen Geräte betreffen, in der Tabelle für verwendbare Szenen; und
Anzeigen der Auswahl einer mobilen Szene, die anderen Szenen als Szenen entspricht, die im Voraus angegeben wurden, wobei das Anzeigen die Auswahl zwischen einer mobilen Priorität, die der Einstellung des einen oder der mehreren eindeutigen elektronischen Geräte die Priorität gibt, und einer Abfragepriorität umfasst, die der Verbindung eines elektronischen Geräts die Priorität gibt, das innerhalb des Kommunikationsbereichs ermittelt wird.

6. Medium zum Speichern eines Programms in einer Vorrichtung zur gegenseitigen Verbindung von Geräten, die einen Drahtloskommunikationsabschnitt (4); eine Tabelle für verwendbare Szenen, die Informationen, die eine gegenseitige Verbindung mehrerer elektronischer Geräte (11 bis 16; 11 bis 13, 20, 21) betreffen, die in einer vorbestimmten verwendbaren Szene vorhanden sind, und Informationen zum Angeben der verwendbaren Szene enthält; eine Prioritätsrangordnungs-Referenztabelle zum Speichern der Prioritätsrangordnung der gegenseitigen Verbindung der mehreren elektronischen Geräte; und eine Verarbeitungseinheit (1) umfasst, die einen Rechner aufweist und elektronische Geräte, die in einem kommunikationsfähigen Bereich vorhanden sind, mittels des Drahtloskommunikationsabschnitts gegenseitig verbindet,
wobei das Programm dem Rechner das Ausführen der folgenden Schritte ermöglicht:
Abfragen elektronischer Geräte, die im kommunikationsfähigen Bereich vorhanden sind, mittels der Vorrichtung zur gegenseitigen Verbindung von Geräten und Anzeigen einer Liste dieser elektronischen Geräte;
Eintragen eines oder mehrerer eindeutiger elektronischer Geräte von der Liste, die in der Lage sind, die verwendbare Szene anzugeben, in der Tabelle für verwendbare Szenen;
Erzeugen von Informationen, die die gegenseitige Verbindung der elektronischen Geräte in der Liste betreffen;
Einstellen der Prioritätsrangordnung der gegenseitigen Verbindung der elektronischen Geräte auf der Grundlage der Prioritätsrangordnungs-Referenztabelle ;
Speichern der erzeugten Informationen, die die gegenseitige Verbindung der elektronischen Geräte betreffen, in der Tabelle für verwendbare Szenen; und
Anzeigen der Auswahl einer mobilen Szene, die anderen Szenen als Szenen entspricht, die im Voraus angegeben wurden, wobei das Anzeigen die Auswahl zwischen einer mobilen Priorität, die der Einstellung des einen oder der mehreren eindeutigen elektronischen Geräte die Priorität gibt, und einer Abfragepriorität umfasst, die der Verbindung eines elektronischen Geräts die Priorität gibt, das innerhalb dieses Kommunikationsbereichs ermittelt wird.

## Revendications

1. Appareil de connexion mutuelle de dispositifs utilisant une liaison radio, comportant :
une section de communication radio (4) ;
une mémoire de scènes utilisables (1a) qui contient une information sur chaque scène utilisable (SCENE 01, SCENE 02), laquelle se rapporte à la connexion mutuelle d'une pluralité de dispositifs électroniques (11-16 ; 11-13, 20, 21) qui sont présents dans chacune d'une pluralité de scènes utilisables, et une information se rapportant à l'un ou à une pluralité de dispositifs électroniques spécifiques ne concernant que les scènes utilisables afin de spécifier celle de la pluralité de scènes utilisables qui est la scène utilisable en cours ;
une unité de traitement (1) permettant de connecter mutuellement des dispositifs électroniques qui se trouvent dans une zone de communication possible au moyen de la section de liaison radio et
une mémoire de référence des niveaux de priorité (le) permettant de stocker un niveau de priorité en vue de créer une information relative à la connexion mutuelle de la pluralité des dispositifs électroniques, dans laquelle :
l'unité de traitement est adaptée pour capter une information portant sur les dispositifs électroniques qui se trouvent dans la zone de communication par l'intermédiaire de la section de liaison radio, afin de juger une scène utilisable en comparant l'information captée avec une information se rapportant à des dispositifs électroniques spécifiques dans la mémoire de scènes utilisables, de lire l'information qui est optimale correspondant à la scène utilisable jugée parmi l'information portant sur chaque scène utilisable se rapportant à la connexion mutuelle des dispositifs électroniques à partir de la mémoire de scènes utilisables sur la base du résultat du jugement, et de connecter mutuellement les dispositifs électroniques qui se trouvent dans la zone de communication sur la base de l'information lue se rapportant à la connexion mutuelle des dispositifs électroniques ;
l'unité de traitement est également adaptée pour :
afficher une liste desdits dispositifs électroniques qui se trouvent dans la zone de communication,
enregistrer un ou plusieurs dispositifs électroniques concerné(s), compris dans cette liste et capable(s) de spécifier une scène utilisable, dans la mémoire de scènes utilisables en tant qu'information pour spécifier à l'avance ladite scène utilisable,
créer une information se rapportant à la connexion mutuelle de la pluralité de dispositifs électroniques compris dans la liste sur la base de la mémoire de référence des niveaux de priorité,
stocker cette information dans la mémoire de scènes utilisables ; et
afficher la sélection d'une scène mobile (SCENE 99) qui correspond à des scènes autres que les scènes qui ont été spécifiées à l'avance, dans lequel ledit affichage inclut la sélection entre une priorité mobile donnant une priorité à l'établissement de l'un ou de plusieurs dispositif(s) électronique(s) concerné(s) et une priorité de balayage donnant la priorité à la connexion d'un dispositif électronique qui est détectée à l'intérieur de ladite zone de communication.

2. Appareil de connexion mutuelle de dispositifs utilisant une liaison radio selon la revendication 1, adaptée de telle sorte que, lorsque l'information se rapportant à la connexion mutuelle de la pluralité de dispositifs électroniques inclus dans la liste est créée, l'information se rapportant au niveau de priorité de la connexion mutuelle de l'ensemble ou de quelques uns de la pluralité des dispositifs électroniques est utilisée en étant téléchargée à partir du réseau Internet.

3. Appareil de connexion mutuelle de dispositifs utilisant une liaison radio selon la revendication 1, dans lequel
la mémoire de référence de niveau de priorité contient, sous la forme d'une information se rapportant au niveau de priorité, au moins l'un quelconque des attributs du réseau, comprenant les coûts de communication, la vitesse de communication, la distance sur le réseau, le type de réseau d'acheminement, et des attributs du produit qui comportent la dimension de l'écran et la qualité du son.

4. Appareil de connexion mutuelle de dispositifs utilisant une liaison radio selon la revendication 1, adapté, de plus, pour fournir une fonction dans laquelle, dans le cas où le niveau de priorité est modifié lorsqu'il se produit un déplacement, une sélection est réalisée entre un premier établissement dans lequel des requêtes de modification de niveau de priorité ne sont pas reçues en provenance de l'extérieur et un second établissement dans lequel des requêtes de modification de niveau de priorité sont reçues en provenance de l'extérieur.

5. Procédé de création d'un tableau de scènes utilisables pour la connexion mutuelle de dispositifs, comprenant les étapes comportant le fait de
préparer un appareil de connexion mutuelle de dispositifs qui comprend une section de liaison radio (4); un tableau de scènes utilisables contenant une information se rapportant à une connexion mutuelle d'une pluralité de dispositifs électroniques (11-16 ; 11-13, 20, 21) qui se trouvent dans une scène utilisable prédéterminée et une information pour spécifier la scène utilisable; un tableau de référence de niveau de priorité pour stocker le niveau de priorité de la connexion mutuelle de la pluralité des dispositifs électroniques ; et une unité de traitement (1) permettant de connecter mutuellement, au moyen de la section de liaison radio, les dispositifs électroniques qui sont présents dans une zone de communication possible ;
balayer les dispositifs électroniques qui sont présents dans la zone de communication possible au moyen de l'appareil de connexion mutuelle de dispositifs et afficher une liste de ces dispositifs électroniques ;
enregistrer, dans le tableau de scènes utilisables, un ou plusieurs dispositif(s) électronique(s) concerné(s) à partir de la liste, qui est (sont) capable(s) de spécifier une scène utilisable ;
créer une information se rapportant à la connexion mutuelle des dispositifs électroniques de la liste ;
établir le niveau de priorité de la connexion mutuelle des dispositifs électroniques sur la base du tableau de référence des niveaux de priorité ;
stocker l'information créée se rapportant à la connexion mutuelle des dispositifs électroniques dans le tableau de scène utilisable ; et
afficher la sélection d'une scène mobile qui correspond à des scènes autres que les scènes qui ont été spécifiées à l'avance, ledit affichage comprenant la sélection entre une priorité mobile donnant la priorité à l'établissement de l'un ou de plusieurs dispositif(s) électronique (s) concerné(s) et une priorité de balayage donnant la priorité à la connexion d'un dispositif électronique qui est détecté à l'intérieur de ladite zone de communication.

6. Support permettant d'enregistrer un programme dans un appareil de connexion mutuelle de dispositifs qui comprend une section de liaison radio (4) ; un tableau de scène utilisable contenant une information se rapportant à une connexion mutuelle d'une pluralité de dispositifs électroniques (11-16 ; 11-13, 20, 21) qui se trouvent dans une scène utilisable prédéterminée et une information permettant de spécifier la scène utilisable ; un tableau de référence de niveaux de priorité pour stocker le niveau de priorité de la connexion mutuelle de la pluralité des dispositifs électroniques ; et une unité de traitement (1) qui comporte un ordinateur et qui connecte mutuellement, au moyen de la section de liaison radio, des dispositifs électroniques qui se trouvent dans une zone de communication possible,
le programme permettant à l'ordinateur d'exécuter les étapes comprenant le fait de :
balayer les dispositifs électroniques qui sont présents dans la zone de communication possible au moyen de l'appareil de connexion mutuelle de dispositifs et d'afficher une liste de ces dispositifs électroniques ;
enregistrer, dans le tableau de scène utilisable, un ou plusieurs dispositif(s) électronique(s) concerné(s) provenant de la liste qui est (sont) capable(s) de spécifier la scène utilisable ;
créer une information se rapportant à la connexion mutuelle des dispositifs électroniques de la liste ;
établir le niveau de priorité de la connexion mutuelle des dispositifs électroniques sur la base du tableau de référence des niveaux de priorité ;
stocker l'information produite se rapportant à la connexion mutuelle des dispositifs électroniques dans le tableau de scène utilisable ; et
afficher la sélection d'une scène mobile qui correspond à des scènes autres que celles qui ont été spécifiées à l'avance, ledit affichage incluant la sélection entre une priorité mobile donnant la priorité à l'établissement de l'un ou de plusieurs dispositif(s) électronique(s) concerné(s) et une priorité de balayage donnant la priorité à la connexion d'un dispositif électronique qui est détecté à l'intérieur de ladite zone de communication.
